# EUROPÄISCHE PATENTSCHRIFT

(11) **EP 1 668 850 B1**
(45) Veröffentlichungstag und Bekanntmachung des Hinweises auf die Patenterteilung: **08.02.2012**
(21) Anmeldenummer: 04766401.6
(22) Anmeldetag: 03.08.2004
(51) Int. Cl.: H04L 12/58

(54) **Nachrichtenübertragung in einem Netzwerk**
Transmitting messages in a network
Transmission de messages dans un réseau

(30) Priorität: 30.09.2003 DE 10345542
(43) Veröffentlichungstag der Anmeldung: 14.06.2006
(73) Patentinhaber: Siemens Enterprise Communications GmbH & Co. KG, 81379 München (DE)
(72) Erfinder: UECKER, Rainer, 45470 Mülheim (DE)
(74) Vertreter: Fritzsche, Thomas
(86) Internationale Anmeldenummer: PCT/EP2004/051695
(87) Internationale Veröffentlichungsnummer: WO 2005/034450

(56) Entgegenhaltungen:
- WO-A-01/20855
- US-A1- 2003 055 903
- PATENT ABSTRACTS OF JAPAN Bd. 1999, Nr. 13, 30. November 1999 (1999-11-30) & JP 11 232188 A (FUJITSU LTD), 27. August 1999 (1999-08-27)

## Beschreibung

Die Erfindung betrifft ein Verfahren zur Nachrichtenübertragung in einem Netzwerk gemäß Anspruch 1 einer Sender-bzw. Empfänger-Postbearbeitungseinrichtung gemäß Anspruch 5 bzw. 8

Das Versenden von Informationen auf elektronischem Wege, d.h. also beispielsweise mittels einer E-Mail, gewinnt im heutigen Zeitalter der modernen Informationstechnologie immer mehr an Bedeutung. Neben einer Reduktion von Kosten durch beispielsweise verminderten Papieraufwand, die Einsparung von Portokosten bzw. Zustellkosten, die gerade dann, wenn Eile geboten ist, sehr hoch sein können, bietet das Versenden von Nachrichten auf elektronischem Wege vor allem den Vorteil, dass eine Nachricht einen Empfänger in kürzester Zeit nach dem Senden erreicht.

Ein weiterer Vorteil der elektronischen Nachrichten ergibt sich, wenn eine Nachricht nicht nur einem Empfänger, sondern mehreren Empfängern zugesandt werden muss. Musste die Nachricht früher entweder arbeitsaufwendig kopiert oder zeitaufwendig von Empfänger zu Empfänger gereicht werden, so kann des Kopierens mittlerweile in Sekundenschnelle auf elektronischem Weg durchgeführt werden. Hierzu lassen sich typischerweise in E-Mail-Programmen, beispielsweise für Interessengemeinschaften oder Arbeitsgruppen, sogenannte Benachrichtigungsgruppen definieren. In den Benachrichtigungsgruppen sind dann jeweils die Personen zusammengefasst, an welche eine Nachricht bzw. E-Mail gesendet bzw. weitergeleitet werden soll. Nach dem Einrichten der Benachrichtigungsgruppen kann das Senden einer Nachricht an alle Mitglieder der Benachrichtigungsgruppe dann einfach dadurch erfolgen, dass die Nachricht die Benachrichtigungsgruppe als Adressat erhält. Die weitere Verteilung an die einzelnen Mitglieder der Benachrichtigungsgruppe wird automatisch vom E-Mail-Programm bzw. einem mit diesem in Verbindung stehenden Mailserver übernommen. Typischerweise sind beispielsweise in Betrieben Personen nicht nur einer Benachrichtigungsgruppe zugeordnet, sondern im Zusammenhang mit verschiedenen Arbeitsaufgaben mehreren.

Häufig ist für den Absender einer Nachricht nicht oder nur mit sehr hohem Zeitaufwand feststellbar, welche Personen zu einer Benachrichtigungsgruppe gehören. Damit ist es auch schwer, festzustellen, ob ein Empfänger die zu sendende Nachricht bereits als Mitglied einer anderen Benachrichtigungsgruppe erhalten hat. Nahezu unmöglich festzustellen ist es für den Absender, ob ein vorgesehener Empfänger eine Nachricht bereits von einem anderen Absender erhalten hat. Dies spielt insbesondere bei weitergeleiteten bzw. weiterzuleitenden Nachrichten eine große Rolle.

Dies führt häufig dazu, dass Empfänger von Nachrichten von einer oder mehreren Personen dieselbe Nachricht zugesandt bekommen. Wird die Nachricht von verschiedenen Personen versandt, kann es zusätzlich vorkommen, dass der Sender zu der Nachricht einen Kommentar hinzufügt, während beispielsweise in der Nachricht enthaltene Anhänge oder dergleichen unverändert bleiben. Während in diesem Falle der Kommentar für den Empfänger von Interesse ist, beinhaltet der Rest der Nachricht keine neuen Informationen.

Beispielsweise können ein Vorgesetzter einer Gruppe und ein Mitarbeiter aus seiner Gruppe von einem Standardisierungsgremium über Änderungen und Aktivitäten über einen entsprechenden Nachrichtenverteiler benachrichtigt werden. Der Vorgesetzte, der alle seine Mitarbeiter ebenfalls in einer Benachrichtigungsgruppe definiert hat, leitet die Nachricht des Standardisierungsgremiums über den von ihm definierten Gruppenverteiler an seine Mitarbeiter weiter. Dabei ist es für den Vorgesetzten aufgrund der Tatsache, dass eine Vielzahl von Benachrichtigungsgruppenverteilern existiert, nahezu nicht möglich, festzustellen, dass einer seiner Mitarbeiter die Information über einen anderen Weg bereits erhalten hat. Dadurch, dass der Mitarbeiter die Nachricht mehrfach erhalten hat, wird einerseits das Datenaufkommen im Netzwerk unnötig erhöht und andererseits die Produktivität des Mitarbeiters gesenkt, da dieser einen Teil seiner Arbeitszeit darauf verwenden muss, mehrfach erhaltene Nachrichten zu identifizieren und zu verwerfen. Darüber hinaus ist es beim Vorgang des Verwerfens einer mehrfach weitergeleiteten Nachricht auch nicht ausreichend, die Nachricht ungeöffnet zu verwerfen, da meist aus einer Betreffzeile nicht erkennbar ist, ob der Sender der Nachricht einen Kommentar zu dieser hinzugefügt hat oder nicht.

Aus den Druckschriften WO 01/20855 sowie JP 11232188 sind Verfahren bekannt, bei denen eine mehrfache Übertragung einer inhaltlich identischen mehrfach gesendeten oder weitergeleiteten Nachricht zu einem selben Empfänger unterdrückt wird, so dass der Empfänger inhaltlich gleiche Nachrichten lediglich einmal erhält. Darüber hinaus ist aus U.S.-Patent-veröffentlichung US 2003/0055903 A1 ein dazu ähnliches verfahren bekannt, bei dem eine durch ein E-Mail-System duplizierte und mehrfach zu übermittelnde jedoch wunschgemäß eigentlich nur einmal zu übermittelnde Nachricht derart behandelt wird, dass Duplikate der Nachricht nicht bis zum Empfänger ausgeliefert werden. Dabei wird mittels der Gegenstände der genannten Druckschriften eine Reduzierung von eingehenden identischen Nachrichten ermöglicht, wobei insbesondere bei Weiterleiten von Nachrichten die vorgestellten Verfahren nicht durchgängig greifen.

Aufgabe der vorliegenden Erfindung ist es, ein Verfahren und eine geeignete Vorrichtung anzugeben, um den Mehrfachempfang von Nachrichten und Nachrichtenelementen automatisch weitgehend zu unterbinden, wobei sichergestellt werden soll, dass Nachrichtenelemente, die vom Sender geändert wurden, übermittelt werden.

Diese Aufgabe wird durch ein Verfahren mit den Merkmalen des Anspruchs 1 sowie durch eine Sender-Postbearbeitungseinrichtung mit den Merkmalen des Anspruchs 5 und eine Empfänger postbearbeitungseinrichtung mit den Merkmalen des Anspruchs 8 gelöst. Zweckmäßige Fortbildungen des Erfindungsgedankens sind Gegenstand der abhängigen Ansprüche.

Ein wesentlicher Gedanke der Erfindung ist, dass ein Verfahren zur Nachrichtenübertragung in einem Netzwerk über mit diesem verbundene Datenendgeräte folgende Schritte aufweist: ein Senden einer weiterzuleitenden Nachricht von einem Sender-Datenendgerät zu einer zugeordneten ersten Postbearbeitungseinrichtung; eine Zuordnung eines eindeutigen Identifikators zu der Nachricht, der angibt, dass es sich um eine weiterzuleitende Nachricht handelt, im Sender-Datenendgerät oder der ersten Postbearbeitungseinrichtung; eine Auswertung des Identifikators durch die erste Postbearbeitungseinrichtung aufgrund von dort vorliegenden Daten über den Nachrichteneingang bei einem Adressaten-Datenendgerät aus der Vergangenheit; und eine in Ansprechen auf das Auswertungsergebnis getriggerte oder gesperrte Übermittlung der Nachricht oder von Teilen derselben an das Adressaten-Datenendgerät.

Weiterhin wird die Aufgabe durch ein Verfahren zur Nachrichtenübertragung in einem Netzwerk über mit diesem verbundene Datenendgeräte gelöst, das folgende Schritte aufweist: ein Senden einer weiterzuleitenden Nachricht von einem Sender-Datenendgerät zu einer zugeordneten ersten Postbearbeitungseinrichtung; eine Zuordnung eines eindeutigen Identifikators zu der Nachricht, der angibt, dass es sich um eine weiterzuleitende Nachricht handelt im Sender-Datenendgerät oder der ersten Postbearbeitungseinrichtung; eine Weiterleitung des Identifikators an eine zweite Postbearbeitungseinrichtung, die einem Adressaten-Datenendgerät für die weiterzuleitende Nachricht zugeordnet ist; eine Auswertung des Identifikators durch die zweite Postbearbeitungseinrichtung aufgrund von dort vorliegenden Daten über den Nachrichteneingang bei einem Adressaten-Datenendgerät aus der Vergangenheit; und eine im Ansprechen auf das Auswertungsergebnis getriggerte oder gesperrte Übermittlung der Nachricht oder von Teilen derselben an das Adressaten-Datenendgerät.

Mit Hilfe dieser Verfahren kann der Datenverkehr erheblich reduziert werden. Darüber hinaus wird der Zeitaufwand, der für die Bearbeitung von Nachrichten nötig ist, vermindert, was zu Einsparungen bei Personalkosten führt. Der Speicherbedarf, insbesondere beim Empfangenden, wird ferner erheblich verringert, wobei zusätzlich Kosten für die Bereitstellung und die Pflege des Netzwerks dadurch vermindert werden können, dass beispielsweise Backup-Systeme und auch eventuell Bandbreiten augfgrund des geringeren Datenverkehrs kleiner dimensioniert werden können.

Vorteilhaft ist es, je nach gewähltem Verfahren, wenn die Daten über den Nachrichteneingang bei dem Adressaten-Datenendgerät im Adressaten-Datenendgerät und/oder in der ersten Postbearbeitungseinrichtung bzw. im Adressaten-Datenendgerät und/oder in der ersten und/oder der zweiten Postbearbeitungseinrichtung gespeichert werden. Die Datenspeicherung über den Nachrichteneingang im Adressaten-Datenendgerät kann somit unter Berücksichtigung maßgeblicher Parameter, wie beispielsweise der Netzwerkarchitektur, auf einem oder mehreren Geräten stattfinden. Ein zusätzlicher Vorteil bei einer mehrfachen Speicherung ist, dass u.U. auf ein weiteres Backup, sei es auf einem Bandlaufgerät oder dergleichen, verzichtet werden kann.

In einer bevorzugten Ausführungsform werden die Daten über den Nachrichteneingang beim Adressaten-Datenendgerät in der Postbearbeitungseinrichtung gespeichert, in der die Auswertung des Identifikators stattfindet. Dadurch ist es nicht nötig, Informationen für den Auswertungsvorgang in der Postbearbeitungseinrichtung über das Netzwerk zu holen, was eine hohe Auswertungsgeschwindigkeit sicherstellt.

Vorzugsweise ist die erste Postbearbeitungseinrichtung im Sender-Datenendgerät und/oder die zweite Postbearbeitungseinrichtung im Adressaten-Datenendgerät implementiert. Diese Ausführungsform zeichnet sich dadurch aus, dass für das erfindungsgemäße Verfahren keine zusätzliche Hardware im Netzwerk bereitgestellt werden muß.

In einer bevorzugten Ausführungsform findet die Auswertung des Identifikators auf einem Mailserver des Netzwerks statt. Auch in diesem Fall ist die Anschaffung neuer Hardware für das Netzwerk nicht erforderlich.

In einer weiteren bevorzugten Ausführungsform setzt sich der Identifikator aus Teil-Identifikatoren zusammen, die jeweils Nachrichtenelementen, beispielsweise einem Haupttext und/oder einem Anhang bzw. mehreren Anhängen, zugeordnet sind, wobei jeder Teil-Identifikator in der jeweiligen Postbearbeitungseinrichtung aufgrund der dort vorliegenden Daten über den Nachrichteneingang beim Adressaten-Datenendgerät aus der Vergangenheit ausgewertet wird, und wobei eine in Ansprechen auf das Auswertungsergebnis getriggerte oder gesperrte Übermittlung des jeweiligen Nachrichtenelements ausgelöst wird.

Diese Ausführungsform zeichnet sich dadurch aus, dass das Verfahren aufgrund der Zuordnung von Teil-Identifikatoren zu Nachrichtenelementen, besonders einfach durchführbar ist. Da Nachrichten sehr oft aus einzelnen Nachrichtenelementen, beispielsweise aus einem Haupttext und einem oder mehreren Anhängen, bestehen, kann auf einfache Art und Weise selektiert werden, welches Nachrichtenelement übermittelt werden soll und welches nicht übermittelt werden soll.

Vorzugsweise wird dem Sender und/oder dem Empfänger eine Information über eine blockierte Übermittlung zugeleitet, wenn die Übermittlung aufgrund des Auswertungsergebnisses gesperrt wird. Aufgrund dieser Benachrichtigungen können Nachrichtenverteiler sehr einfach optimiert werden.

In weiteren bevorzugten Ausführungsformen kennzeichnet der Identifikator bzw. der jeweilige Teil-Identifikator Datum und Uhrzeit der ursprünglichen Erstellung der Nachricht, sofern diese vom Sendezeitpunkt abweichen, und/oder eine E-Mail-Adresse eines ursprünglichen Versenders, sofern diese von der E-Mail-Adresse des Senders abweicht, und/oder den Inhalt der Nachricht bzw. des jeweiligen Nachrichtenelements.

Der Vorrichtungsaspekt der Aufgabe wird durch ein Datenendgerät gelöst, das eine Postbearbeitungseinrichtung aufweist, welche so ausgebildet ist, dass ein Identifikator einer Nachricht aufgrund von vorliegenden Daten über einen Nachrichteneingang bei einem Adressaten-Datenendgerät aus der Vergangenheit in einer Auswertungseinheit ausgewertet wird, und aufgrund des Auswertungsergebnisses eine Übermittlung der Nachricht oder von Teilen derselben an ein Adressaten-Datenendgerät getriggert oder gesperrt wird.

Vorzugsweise ist die Postbearbeitungseinrichtung Teil eines Mailservers, der in das Datenendgerät integriert ist. Diese Multifunktionalität des Datenendgeräts stellt sicher, dass die Bearbeitung von Nachrichten mit einem möglichst niedrigen Datenverkehr verbunden ist.

In einer bevorzugten Ausführungsform ist das Datenendgerät mit einer Speichereinheit zur Speicherung der Daten über den Nachrichteneingang bei einem anderen Datenendgerät ausgestattet. In diesem Fall kann die Auswertungseinheit schnell entscheiden, ob eine Übermittlung der Nachricht oder von Teilen der Nachricht getriggert werden soll oder nicht, da keine Informationen benötigt werden, die nicht bereits auf dem Datenendgerät vorliegen.

Der Vorrichtungsaspekt der Aufgabe der vorliegenden Erfindung wird ferner durch ein Netzwerk zur Datenübertragung gelöst, das eine Postbearbeitungseinrichtung enthält, welche so ausgebildet ist, dass ein Identifikator einer Nachricht aufgrund von vorliegenden Daten über einen Nachrichteneingang bei einem Adressaten-Datenendgerät aus der Vergangenheit in einer Auswertungseinheit ausgewertet wird und aufgrund des Auswertungsergebnisses eine Übermittlung der Nachricht oder von Teilen derselben an das Datenendgerät getriggert oder gesperrt wird.

In einer bevorzugten Ausführungsform ist die Postbearbeitungseinrichtung Teil eines Mailservers.

Die Daten über den Nachrichteneingang bei dem Adressaten-Datenendgerät werden vorzugsweise in der Postbearbeitungseinrichtung gespeichert.

Zur Erläuterung des Prinzips des vorgeschlagenen Verfahrens sowie zur Illustration eines Ausführungsbeispiels dienen die Figuren. Von diesen zeigen:
Fig. 1 eine schematische Darstellung der am Verfahren beteiligten Komponenten, und
Fig. 2 eine schematische Darstellung der Nachrichtenweiterleitung.

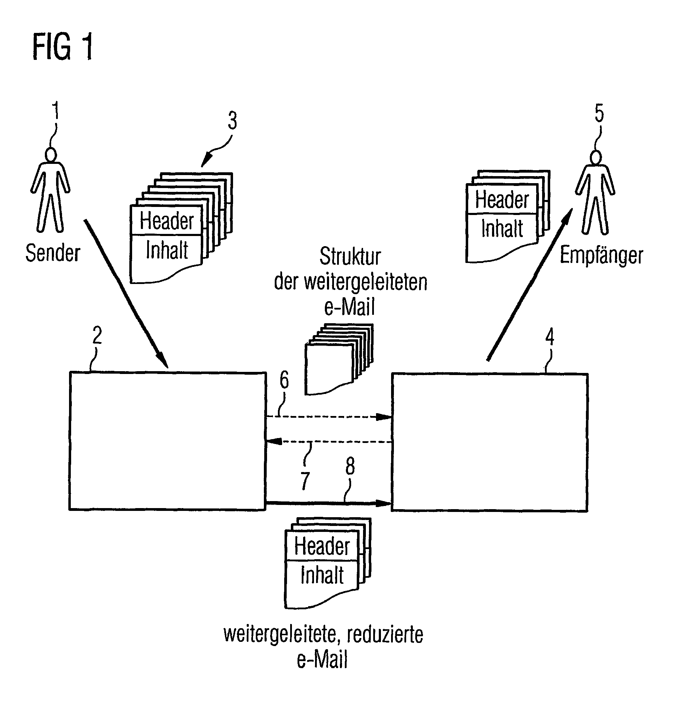

In Fig. 1 sind die am Verfahren zur Nachrichtenübertragung beteiligten Komponenten schematisch dargestellt. Es sind dies: ein Sender 1, eine dem Sender 1 zugeordnete Postbearbeitungseinrichtung 2, eine Nachricht 3, die aus Nachrichtenelementen, nämlich einem Haupttext und aus Anhängen, besteht, eine dem Empfänger zugeordnete Postbearbeitungseinrichtung 4 und ein für die Nachricht vorgesehener Empfänger 5.

Der Nachricht 3 sind folgende Daten zugeordnet: eine Kennung, dass es sich um eine weitergeleitete Nachricht handelt; Datum und Uhrzeit des Sendens und eine E-Mailadresse des Senders. Bei einer Weiterleitung der Nachricht 3 werden jedem Nachrichtenelement besondere Zusatzinformationen zugeordnet. Diese sind: Datum und Zeit der ursprünglichen Erstellung, sofern sie vom Sendezeitpunkt abweichen; eine E-Mailadresse des ursprünglichen Versenders, sofern diese von der E-Mailadresse des Senders 1 abweicht, und der Inhalt des Nachrichtenelements.

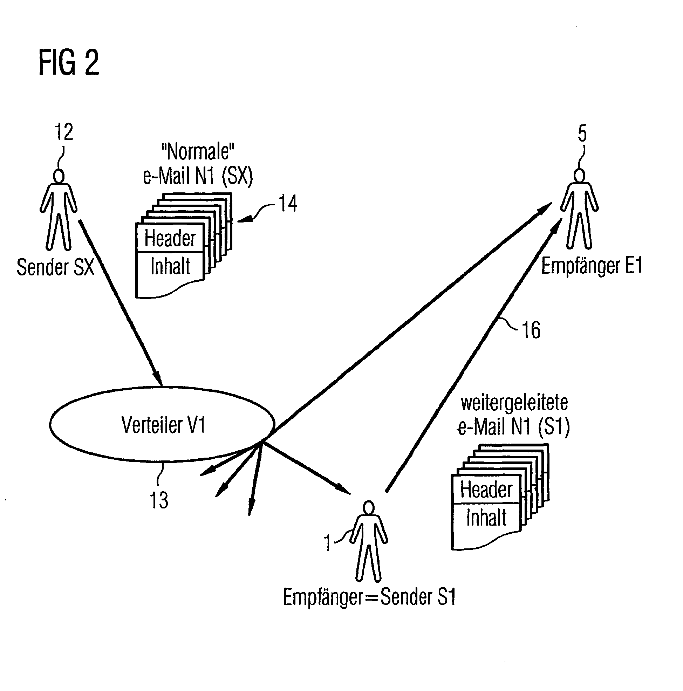

Im folgenden soll der Ablauf einer Nachrichtenweiterleitung anhand der Figuren 1 und 2 näher beschrieben werden. Der Sender 1 hat eine nicht weitergeleitete oder als nicht weitergeleitet gekennzeichnete Nachricht 14 über einen Verteiler 13 von einem als Sender 12 bezeichneten Teilnehmer erhalten. Die Nachricht 14 besteht aus einem Text und Anhängen, wobei an dieser Stelle erwähnt sei, dass sowohl der Text als auch die Anhänge nicht zwingend vorhanden sein müssen. Im Extremfall kann eine Nachricht sogar leer sein.

Die Nachricht 14 weist folgenden Aufbau auf: eine Kennzeichnung, dass es sich um eine normale Nachricht handelt; das Datum und die Uhrzeit der Versendung durch den Sender 12, die E-Mailadresse des Senders 12; ein Nachrichtenelement NE 1.1, das den Haupttext darstellt; den Inhalt von NE 1.1; ein Nachrichtenelement NE 1.2, das den Anhang darstellt; und den Inhalt von NE 1.2. Felder, die für Datum und Uhrzeit der ursprünglichen Erstellung und die E-Mailadresse des ursprünglichen Versenders vorgesehen sind, sind leer. An dieser Stelle sei angemerkt, dass die letztgenannten Felder nicht notwendigerweise bereits Bestandteil der Nachricht sein müssen, sie können auch später erzeugt bzw. der Nachricht hinzugefügt werden. Neben dem Sender 1 hat auch ein Empfänger 5 dieselbe Nachricht 14 über den Verteiler 13 erhalten. Auch ein direkter Erhalt der Nachricht 14 vom Sender 12 ohne den Verteiler 13 als Zwischenstation wäre denkbar.

Der Sender 1 möchte die Nachricht 14 über einen anderen Verteiler (nicht dargestellt) oder direkt an den Empfänger 15 weiterleiten (angedeutet durch Pfeil 16),d.h. der Empfänger befindet sich in einem weiteren Verteiler oder kann auch direkt adressiert werden. Dazu wird die Nachricht an die dem Sender zugeordnete Postbearbeitungseinrichtung 2 (vgl. Fig. 1) geleitet. Beim Versenden der Nachricht 14 wird mittels einer Bedienoberflächenprozedur oder einer Voreinstellung im E-Mailprogramm, das den für den Versand sorgt, entschieden, die E-Mail nur an Personen weiterzuleiten, die die Nachricht 14 noch nicht erhalten haben, wobei die Inhalte der Nachrichtenelemente durch den Sender 11 unverändert bleiben.

Von der dem Sender zugeordneten Postbearbeitungseinrichtung 2 wird eine Prüfnachricht an die Postbearbeitungseinrichtung 4, die dem Empfänger zugeordnet ist, mit dem folgenden Inhalt versandt: einer Kennung, dass es sich um eine weitergeleitete Nachricht handelt; dem Datum und der Uhrzeit des Versendens durch den Sender 11, der E-Mailadresse des Senders 11; dem Nachrichtenelement NE 1.1, das den Haupttext darstellt, wobei dieser durch die dem Sender zugeordnete Postbearbeitungseinrichtung 2 mit einer Kennung versehen wird, die Datum und Zeit der Versendung durch den Sender 12 sowie die E-Mail-Adresse des Senders 12 enthält; und aus dem Nachrichtenelement NE 1.2, das den Anhang darstellt, das durch die dem Sender zugeordnete Postbearbeitungseinrichtung 2 durch eine Kennung versehen wird, die Datum und Zeit der Versendung durch den Sender 12 sowie die E-Mail-Adresse des Senders 12 enthält. Inhalte der Nachrichtenelemente werden nicht mit versandt.

Jede Postbearbeitungseinrichtung, also sowohl die dem Sender zugeordnete Postbearbeitungseinrichtung 2 als auch die dem Empfänger zugeordnete Postbearbeitungseinrichtung 4, speichert Informationen über empfangene E-Mails in der eben genannten Prüfnachrichtenstruktur für seine angeschlossenen Teilnehmer. Der Zeitraum, über den diese Informationen gespeichert werden, ist frei konfigurierbar.

Die dem Empfänger zugeordnete Postbearbeitungseinrichtung 4, die die Prüfnachricht enthält (angedeutet durch den Pfeil 6 in Fig. 1), wertet aus, ob es sich um eine weitergeleitete Nachricht handelt. Ist dies der Fall, so prüft die dem Empfänger zugeordnete Postbearbeitungseinrichtung 4, ob früher schon für den Empfänger 5 Nachrichtenelemente gleichen Inhalts übertragen wurden. Trifft auch dies zu, so leitet die dem Empfänger zugeordnete Postbearbeitungseinrichtung 4 der dem Sender zugeordneten Postbearbeitungseinrichtung 2 eine Nachricht zu, die besagt, dass eine Zustellung nicht erforderlich ist. Falls die Nachricht in der Vergangenheitnoch nicht beim Empfänger 5 eingegangen ist bzw. Elemente aus der Nachricht noch nicht in der vergangenheit beim Empfänger 5 eingegangen sind, werden die Kennungen für die zu übertragenden, von der dem Empfänger zugeordneten Postbearbeitungseinrichtung 4 als neu erkannten Nachrichtenelemente der dem Sender zugeordneten Postbearbeitungseinrichtung 2 übermittelt. Dies ist durch den Pfeil 7 in Fig. 1 angedeutet. Die letztgenannte Meldung hat folgenden Inhalt: eine Sendeanforderung für die weitergeleitete Nachricht, eine Aufforderung, den Inhalt des Nachrichtenelements NE 1.1, das dem Haupttext entspricht, nicht zu versenden, da dieser als dem Empfänger 5 bereits vorliegend identifiziert wurde, und eine Aufforderung, das Nachrichtenelement, das dem Anhang entspricht, zu senden, da dieses als dem Empfänger 5 nicht vorliegend identifiziert wurde.

Im nächsten Schritt (gekennzeichnet durch den Pfeil 8 in Fig. 1) werden die angeforderten Inhalte der Nachrichtenelemente an die dem Empfänger zugeordnete Postbearbeitungseinrichtung 4 versandt. (Dies ist angedeutet durch den Pfeil 8 in Fig. 1).

Die dem Empfänger 5 zugestellte Nachricht weist folgende Struktur auf: eine Kennung, dass es sich um eine weitergeleitete Nachricht handelt; das Datum und die Zeit der Versendung durch den Sender 1; die E-Mailadresse des Senders 1; das Nachrichtenelement NE 1.1, das den Haupttext darstellt, mit einer Kennung, die Datum und Uhrzeit der Versendung durch dein Sender 12 sowie die E-Mailadresse des Senders 12 enthält; und das Nachrichtenelement NE 1.2, das den Anhang darstellt mit einer Kennung, die Datum und Zeit der Versendung durch den Sender 12 sowie die E-Mailadresse des Senders 12 und den Inhalt des Anhangs enthält.

Im Falle, dass sowohl der Haupttext als auch der Anhang inhaltlich bereits beim Empfänger 5 vorliegen, wird eine Rahmenstruktur der weitergeleiteten Nachricht, die sich aus den vorgenannten Bestandteilen zusammensetzt, wobei der Inhalt des Anhangs nicht mit übermittelt wird, übertragen. Damit wird der Empfänger 5 über die versuchte Zustellung informiert und kann eventuell nötige Maßnahmen treffen. Auch dem Sender 1 wird eine entsprechende Nachricht zum gleichen Zweck zugestellt.

Anzumerken ist an dieser Stelle, dass für den Fall, dass die Nachrichtenelemente zwar durch den Sender 1 bzw. durch die dem Sender zugeordnete Postbearbeitungseinrichtung 2 gekennzeichnet werden, die Nachricht selbst aber als normale Nachricht versendet wird, was bedeutet, dass keine Prüfnachricht erzeugt wird, empfängerseitig nach wie vor die Möglichkeit besteht, die Nachricht zu verwerfen. Dies führt zwar nicht zu einem reduzierten Datenaufkommen im Netz, der Bearbeitungsaufwand beim Empfänger 5 verringert sich jedoch.

Das Versenden und der Empfang von Nachrichten findet mit Hilfe von Datenendgeräten statt, die vom Sender 1 und dem Empfänger 5 bedient werden. Diese sind in Fig. 1 und Fig. 2 nicht näher dargestellt. Die dem Sender 1 zugeordnete Postbearbeitungseinrichtung 2 ist im Datenendgerät des Senders integriert, während die dem Empfänger 5 zugeordnete Postbearbeitungseinrichtung 4 im Datenendgerät des Empfängers integriert ist. Die beiden Datenendgeräte sind über ein entsprechendes Netzwerk miteinander verbunden.

Obwohl die Erfindung anhand eines Ausführungsbeispiels mit fester Merkmalskombination beschrieben wird, umfaßt sie doch auch die denkbaren weiteren vorteilhaften Kombinationen dieser Merkmale, wie sie insbesondere, aber nicht erschöpfend, durch die Unteransprüche angegeben sind.

## Patentansprüche

1. Verfahren zur Nachrichtenübertragung über ein Netzwerk zwischen mit diesem verbundenen Datenendgeräten, das folgende Schritte aufweist:
- Senden einer Nachricht (14) von einem Sender-Datenendgerät zu einer zugeordneten Sender-Postbearbeitungseinrichtung (2), wobei die Nachricht eine Information darüber enthält, ob es sich um eine weitergeleitete Nachricht handelt oder nicht,
- im Falle einer nicht weitergeleiteten Nachricht Senden der Nachricht (14) von der Sender-Postbearbeitungseinrichtung (2) an eine Empfänger-Postbearbeitungseinrichtung (4), die einem Adressaten-Datenendgerät für die Nachricht zugeordnet ist,
- im Falle einer weitergeleiteten Nachricht Erzeugung einer Prüfnachricht in der Sender-Postbearbeitungseinrichtung (2), wobei die Prüfnachricht Identifikatoren bezüglich der Nachricht (14) umfasst, und Senden der genannten Prüfnachricht von der Sender-Postbearbeitungseinrichtung (2) an eine Empfänger-Postbearbeitungseinrichtung (4), die einem Adressaten-Datenendgerät für die weitergeleitete Nachricht zugeordnet ist,
- Speichern von Identifikatoren aus empfangenen Nachrichten (14) in einer Empfänger-Postbearbeitungseinrichtung (4),
- Auswertung einer empfangenen Prüfnachricht in einer Empfänger-Postbearbeitungseinrichtung (4) aufgrund eines Vergleichs mit dort gespeicherten Identifikatoren von Nachrichten an dasselbe Adressaten-Datenendgerät aus der Vergangenheit, und
- Benachrichtigen der Sender-Postbearbeitungseinrichtung (2) durch die Empfänger-Postbearbeitungseinrichtung (4) in Abhängigkeit des Auswertungsergebnisses darüber, ob die Sender-Postbearbeitungseinrichtung (2) die zu der Prüfnachricht gehörige Nachricht bzw. Nachrichtenteile dieser Nachricht senden soll oder nicht.

2. Verfahren nach Anspruch 1,
**dadurch gekennzeichnet, dass** die Sender-Postbearbeitungseinrichtung (2) im Sender-Datenendgerät und/oder die Empfänger-Postbearbeitungseinrichtung (4) im Adressaten-Datenendgerät implementiert ist.

3. Verfahren nach einem der vorangehenden Ansprüche,
**dadurch gekennzeichnet, dass** der Identifikator einer Nachricht (14) sich aus Teil-Identifikatoren zusammensetzt, die jeweils Nachrichtenelementen der Nachricht (14), beispielsweise einem Haupttext und/oder einem Anhang bzw. mehreren Anhängen zugeordnet sind, wobei in der jeweiligen Empfänger-Postbearbeitungseinrichtung (4) aufgrund der dort gespeicherten Identifikatoren von bereits empfangenen Nachrichten jeder Teil-Identifikator der Prüfnachricht mit dem entsprechenden Teil-Identifikator einer für den Adressaten der Prüfnachricht bereits empfangenen Nachricht(14) verglichen wird, und wobei eine in Abhängigkeit des Vergleichsergebnisses getriggerte oder gesperrte Übermittlung des jeweiligen Nachrichtenelements der zu der Prüfnachricht gehörigen Nachricht (14) ausgelöst wird.

4. Verfahren nach einem der vorangehenden Ansprüche,
**dadurch gekennzeichnet, dass** der Identifikator bzw. der jeweilige Teil-Identifikator Datum und Uhrzeit der ursprünglichen Erstellung der Nachricht, sofern diese vom Sendezeitpunkt abweichen, und/oder eine E-Mail-Adresse eines ursprünglichen Versenders, sofern diese von der E-Mail-Adresse des Senders (1) abweicht, und/oder den Inhalt der Nachricht (14) bzw. des jeweiligen Nachrichtenelements kennzeichnet.

5. Sender-Postbearbeitungseinrichtung (2) zum Senden von Nachrichten über ein Netzwerk,
die so ausgebildet ist, dass sie
- eine Nachricht (14) von einem Sender-Datenendgerät empfängt und diese daraufhin untersucht, ob es sich bei der Nachricht um eine weitergeleitete Nachricht handelt oder nicht,
- im Falle einer nicht weitergeleiteten Nachricht die Nachricht (14) an eine dem Adressaten der Nachricht zugeordnete Empfänger-Postbearbeitungseinrichtung (4) sendet,
- im Falle einer weitergeleiteten Nachricht eine Prüfnachricht erzeugt, wobei die Prüfnachricht Identifikatoren bezüglich der Nachricht (14) umfasst,
- die erzeugte Prüfnachricht an eine dem Adressaten der Nachricht zugeordnete Empfänger-Postbearbeitungseinrichtung (4) sendet,
- auf Benachrichtigung durch die genannte Empfänger-Postbearbeitungseinrichtung (4) die Nachricht bzw. Nachrichtenteile der Nachricht sendet oder nicht.

6. Sender-Postbearbeitungseinrichtung (2) nach Anspruch 5, **dadurch gekennzeichnet, dass** die Sender-Postbearbeitungseinrichtung (2) im Netzwerk als Teil eines Mailservers implementiert ist.

7. Sender-Postbearbeitungseinrichtung (2) nach Anspruch 5, **dadurch gekennzeichnet, dass** die Sender-Postbearbeitungseinrichtung (2) im Sender-Datenendgerät implementiert ist.

8. Empfänger-Postbearbeitungseinrichtung (4) zum Empfangen von Nachrichten, die über ein Netzwerk gesendet werden,
die so ausgebildet ist, dass sie
- bei Empfang einer Nachricht (14) von einer Sender-Postbearbeitungseinrichtung (2) in der Nachricht (14) enthaltene Identifikatoren speichert,
- bei Empfang einer Prüfnachricht von einer Sender-Postbearbeitungseinrichtung (2) einen Vergleich der in der Prüfnachricht enthaltenen Identifikatoren mit gespeicherten Identifikatoren bezüglich Nachrichten an denselben Adressaten aus der Vergangenheit durchführt, und die Sender-Postbearbeitungseinrichtung in Abhängigkeit des Vergleichs darüber benachrichtigt, ob die Sender-Postbearbeitungseinrichtung, die zu der Prüfnachricht gehörige Nachricht bzw. Nachrichtenteile dieser Nachricht senden soll oder nicht.

9. Empfänger-Postbearbeitungseinrichtung (4) nach Anspruch 8,
**dadurch gekennzeichnet, dass** die Empfänger-Postbearbeitungseinrichtung (4) im Netzwerk als Teil eines Mailservers implementiert ist.

10. Empfänger-Postbearbeitungseinrichtung (4) nach Anspruch 8,
**dadurch gekennzeichnet, dass** die Empfänger-Postbearbeitungseinrichtung (4) im Adressaten-Datenendgerät implementiert ist.

## Claims

1. A method for transmitting messages via a network between data terminals connected thereto, comprising the following steps:
- A message (14) containing information about whether or not it is a forwarded message is sent from a sender data terminal to an assigned sender mail processing device (2),
- If it is not a forwarded one, the message (14) is sent from the sender mail processing device (2) to a recipient mail processing device (4) which is assigned to an addressee data terminal for the message,
- If the message is a forwarded one, a test message containing identifiers about the message (14) is generated in the sender mail processing device (2) and sent from the sender mail processing device (2) to a recipient mail processing device (4) which is assigned to an addressee data terminal for the forwarded message,
- Identifiers from received messages (14) are stored in a recipient mail processing device (4),
- A received test message is evaluated in a recipient mail processing device (4) based on a comparison with identifiers stored therein of messages to the same addressee data terminal in the past, and
- The recipient mail processing device (4) notifies the sender mail processing device (2) as to whether, depending on the evaluation result, the sender mail processing device (2) is to send the message and/or parts of said message belonging to the test message or not.

2. A method according to claim 1 wherein the sender mail processing device (2) is implemented in the sender data terminal and/or the recipient mail processing device (4) in the addressee data terminal.

3. A method according any one of the preceding claims, wherein the identifier of a message (14) is made up of part-identifiers each assigned to message elements of the message (14), for example to a main text and/or to an attachment or to a plurality of attachments, and in the respective recipient mail processing device (4) each part-identifier of the test message is compared - on the basis of the identifiers stored in said recipient mail processing device (4) of previously received messages - with the corresponding part-identifier of a message (14) already received for the addressee of the test message, and wherein a transmission - triggered or blocked depending on the result of the comparison - of the respective message element of the message (14) that belongs to the test message is initiated.

4. A method according any one of the preceding claims, wherein the identifier or respective part-identifier identifies the date and time of the original message creation if they differ from the sending time, and/or an email address of an original sender if this differs from the email address of the sender (1), and/or the content of the message (14) or respective message element.

5. A sender mail processing device (2) for sending messages over a network, being so configured that
- it receives a message (14) from a sender data terminal and then examines it to establish whether the message is a forwarded message or not,
- if the message is not a forwarded message, it sends the message (14) to a recipient mail processing device (4) assigned to the addressee of the message,
- if the message is a forwarded message, it generates a test message, this test message comprising identifiers relating to the message (14),
- it sends the generated test message to a recipient mail processing device (4) assigned to the addressee of the message,
- upon notification by the said recipient mail processing device (4) it sends the message or message parts of the message or not.

6. A sender mail processing device (2) according to claim 5, wherein the sender mail processing device (2) is implemented in the network as part of a mailserver.

7. A sender mail processing device (2) according to claim 5, wherein the sender mail processing device (2) is implemented in the sender data terminal.

8. A recipient mail processing device (4) for receiving messages sent over a network, being so configured that
- when it receives a message (14) from a sender mail processing device (2) it stores identifiers contained in the message (14),
- when it receives a test message from a sender mail processing device (2) it compares identifiers contained in the test message with stored identifiers relating to messages to the same address in the past, and depending on the comparison notifies the sender mail processing device as to whether the sender mail processing device should send the message or message parts belonging to the test message or not.

9. A recipient mail processing device (4) according to claim 8, wherein the recipient mail processing device (4) is implemented in the network as part of a mailserver.

10. A recipient mail processing device (4) according to claim 8, wherein the recipient-mail processing device (4) is implemented in the addressee data terminal.

## Revendications

1. Procédé servant à transmettre des messages par l'intermédiaire d'un réseau entre des terminaux de données reliés audit réseau, lequel procédé comporte les étapes suivantes consistant à :
- envoyer un message (14) depuis un terminal de données émetteur vers un dispositif de post-traitement émetteur (2) associé, sachant que le message contient une information précisant s'il s'agit ou non d'un message transféré,
- dans le cas d'un message non transféré, envoyer le message (14) depuis le dispositif de post-traitement émetteur (2) à un dispositif de post-traitement récepteur (4) qui est associé à un terminal de données de destinataires pour le message,
- dans le cas d'un message transféré, générer un message de contrôle dans le dispositif de post-traitement émetteur (2), sachant que le message de contrôle comporte des identificateurs concernant le message (14), et envoyer ledit message de contrôle depuis le dispositif de post-traitement émetteur (2) à un dispositif de post-traitement récepteur (4), qui est associé à un terminal de données de destinataires pour le message transféré,
- stocker des identificateurs extraits des messages (14) reçus dans un dispositif de post-traitement récepteur (4),
- évaluer un message de contrôle reçu dans un dispositif de post-traitement récepteur (4) sur la base d'une comparaison entre des identificateurs stockés à cet emplacement de messages destinés antérieurement au terminal de données de destinataires, et
- notifier le dispositif de post-traitement émetteur (2) par le dispositif de post-traitement récepteur (4) en fonction du résultat de l'évaluation indiquant si le dispositif de post-traitement émetteur (2) doit envoyer ou non le message associé au message de contrôle ou les parties de message de ce message.

2. Procédé selon la revendication 1,
**caractérisé en ce que** le dispositif de post-traitement émetteur (2) est implémenté dans le terminal de données émetteur et/ou le dispositif de post-traitement récepteur (4) est implémenté dans le terminal de données de destinataires.

3. Procédé selon l'une quelconque des revendications précédentes, **caractérisé en ce que** l'identificateur d'un message (14) se compose d'identificateurs partiels, qui respectivement sont associés à des éléments de messages du message (14), par exemple à un texte principal et/ou à une annexe ou à plusieurs annexes, sachant que dans le dispositif de post-traitement récepteur (4) respectif sur la base des identificateurs de messages déjà reçus et stockés à cet emplacement, chaque identificateur partiel du message de contrôle est comparé à l'identificateur partiel correspondant d'un message (14) déjà reçu pour le destinataire du message de contrôle, et sachant qu'une transmission de l'élément respectif du message (14) associé au message de contrôle, déclenchée ou bloquée en fonction du résultat de la comparaison, est déclenchée.

4. Procédé selon l'une quelconque des revendications précédentes, **caractérisé en ce que** l'identificateur ou l'identificateur partiel respectif marque la date et l'heure auxquelles le message a été initialement établi, dans la mesure où ces dernières diffèrent du moment de l'envoi, et/ou marque une adresse e-mail d'un expéditeur initial, dans la mesure où celle-ci diffère de l'adresse e-mail de l'expéditeur (1), et/ou marque le contenu du message (14) ou de l'élément du message respectif.

5. Dispositif de post-traitement émetteur (2) servant à émettre des messages par l'intermédiaire d'un réseau, qui est réalisé de telle sorte
- qu'il reçoit un message (14) d'un terminal de données émetteur puis examine si ledit message est ou non un message transféré,
- qu'il envoie dans le cas d'un message non transféré, ledit message (14) à un dispositif de post-traitement récepteur (4) associé au destinataire du message,
- qu'il génère dans le cas d'un message transféré, un message de contrôle, sachant que le message de contrôle comporte des identificateurs concernant le message (14),
- qu'il envoie le message de contrôle généré à un dispositif de post-traitement récepteur (4) associé au destinataire du message,
- qu'il envoie ou non sur notification par ledit dispositif de post-traitement récepteur (4) le message ou des parties de message du message.

6. Dispositif de post-traitement émetteur (2) selon la revendication 5, **caractérisé en ce que** le dispositif de post-traitement émetteur (2) est implémenté dans le réseau en tant que partie d'un serveur de messagerie.

7. Dispositif de post-traitement émetteur (2) selon la revendication 5, **caractérisé en ce que** le dispositif de post-traitement émetteur (2) est implémenté dans le terminal de données émetteur.

8. Dispositif de post-traitement récepteur (4) servant à recevoir des messages envoyés par l'intermédiaire d'un réseau et réalisé de telle sorte
- qu'il stocke à réception d'un message (14) par un dispositif de post-traitement émetteur (2) des identificateurs contenus dans le message (14),
- qu'il exécute à réception d'un message de contrôle par un dispositif de post-traitement émetteur (2) une comparaison des identificateurs contenus dans le message de contrôle avec des identificateurs concernant des messages stockés destinés antérieurement aux mêmes destinataires,
- qu'il notifie le dispositif de post-traitement émetteur en fonction de ladite comparaison si le dispositif de post-traitement émetteur doit envoyer ou non le message associé au message de contrôle ou les parties de message de ce message.

9. Dispositif de post-traitement récepteur (4) selon la revendication 8,
**caractérisé en ce que** le dispositif de post-traitement récepteur (4) est implémenté dans le réseau en tant que partie d'un serveur de messagerie.

10. Dispositif de post-traitement récepteur (4) selon la revendication 8,
**caractérisé en ce que** le dispositif de post-traitement récepteur (4) est implémenté dans le terminal de données de destinataires.
